(19) Europäisches Patentamt / European Patent Office / Office européen des brevets

(11) **EP 2 277 934 A1**

(12) **EUROPÄISCHE PATENTANMELDUNG**


(43) Veröffentlichungstag:
**26.01.2011 Patentblatt 2011/04**

(21) Anmeldenummer: **10170358.5**

(22) Anmeldetag: **22.07.2010**

(51) Int Cl.:
***C08G 63/137*** *(2006.01)* ***C08G 63/20*** *(2006.01)*
***C08G 83/00*** *(2006.01)* ***C09D 167/00*** *(2006.01)*
***C09J 167/00*** *(2006.01)* ***C09D 175/04*** *(2006.01)*
***C09J 175/04*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **24.07.2009 EP 09166368**
**13.07.2010 PCT/EP2010/060045**



(71) Anmelder: **BASF SE**
**67056 Ludwigshafen (DE)**

(72) Erfinder:
- **Haberecht, Monika**
  **67063, Ludwigshafen (DE)**
- **Bruchmann, Bernd**
  **67251, Freinsheim (DE)**
- **Mijolovic, Darijo**
  **68309, Mannheim (DE)**
- **Steinbrecher, Angelika Maria**
  **70193, Stuttgart (DE)**
- **Elizalde, Oihana**
  **68159, Mannheim (DE)**


(54) **Verwendung von hochfunktionellen, hoch- oder hyperverzweigten Polyestern**


(57) Die vorliegende Erfindung betrifft die Verwendung von gezielt aufgebauten hochfunktionellen, hoch- oder hyperverzweigten Polyestern, die β,β,β',β'-Tetra(hydroxymethyl)cycloalkanol als Aufbaukomponente eingebaut enthalten.





Printed by Jouve, 75001 PARIS (FR)

**Beschreibung**

Die vorliegende Erfindung betrifft die Verwendung von gezielt aufgebauten hochfunktionellen, hoch- oder hyperverzweigten Polyestern, die β,β,β',β'-Tetra(hydroxymethyl)cycloalkanol als Aufbaukomponente eingebaut enthalten.

Diese hochfunktionellen, hoch- oder hyperverzweigten Polyester können u.a. verwendet werden

- als Haftvermittler, zum Beispiel in Druckfarben,
- als Thixotropiermittel,
- als Bausteine zur Herstellung von Polyadditions- oder Polykondensationspolymeren, Lacken, Überzügen, Klebstoffen, Dichtmassen, Giesselastomeren oder Schaumstoffen
- als Bestandteil von Bindemitteln in Klebstoffen, Druckfarben, Beschichtungen, Schaumstoffen, Überzügen und Lacken, gegebenenfalls mit anderen Komponenten wie z.B. Isocyanaten, Epoxygruppen-enthaltenden Bindemitteln oder Alkydharzen,.

Polyester werden üblicherweise aus der Reaktion von Carbonsäuren mit Alkoholen erhalten. Technisch bedeutend sind aromatische Polyester, d.h. Polyester mit einer Säurekomponente, bei der mindestens eine Carboxygruppe an einen aromatischen Ring gebunden ist, die zum Beispiel aus Phthalsäure, Isophthalsäure oder Terephthalsäure und Ethandiol, Propandiol oder Butandiol hergestellt werden, und aliphatische Polyester, d.h. Polyester mit einer Säurekomponente, bei der alle Carboxygruppen an aliphatische oder cycloaliphatische Kohlenstoffatome gebunden sind, hergestellt aus Bernsteinsäure, Glutarsäure oder Adipinsäure mit Ethandiol, Propandiol, Butandiol, Pentandiol oder Hexandiol. Diese aromatischen oder aliphatischen Polyester sind in der Regel linear, streng difunktionell, oder aber mit einem geringen Verzweigungsgrad aufgebaut.

Hyperverzweigte Polyester auf Basis von Dimethylolpropionsäure sind bekannt aus der WO 93/17060 (EP 630 389) und EP 799 279, in denen Dimethylolpropionsäure als $AB_2$-Baustein (A = Säuregruppe, B = OH-Gruppe) intermolekular zu Polyestern kondensiert wird. Die Synthese ist sehr unflexibel, da man auf $AB_2$-Bausteine wie Dimethylolpropionsäure als alleinigen Einsatzstoff angewiesen ist. Weiterhin sind dendritische Polyester auf Basis von $AB_2$ Bausteinen für den allgemeinen Gebrauch i. d. R. zu kostspielig, da bereits diese Einsatzstoffe teuer sind und oft über mehrstufige Synthesen hergestellt werden müssen.

EP 1109775 beschreibt die Herstellung von hyperverzweigten Polyestern mit einer tetrafunktionellen Zentralgruppe. Hier wird ausgehend von unsymmetrischen Tetrolen, wie beispielsweise Homopentaerythrit, als Zentralmolekül ein Dendrimer-ähnliches Produkt aufgebaut, das in Lacken Einsatz findet. Derartige unsymmetrische Tetrole sind jedoch teure Spezialchemikalien, die kommerziell nicht in großen Mengen verfügbar sind.

DE 101 63 163 und DE 10219508 beschreiben die Herstellung von hyperverzweigten Polyestern auf Basis eines $A_2 + B_3$-Ansatzes. Dieses Prinzip basiert auf dem Einsatz von Dicarbonsäuren und Triolen bzw. von Tricarbonsäuren und Diolen. Die Flexibilität dieser Synthesen ist deutlich höher, da man nicht auf den Einsatz eines $AB_2$-Bausteins angewiesen ist.

WO 2005/118677 beschreibt hyperverzweigte Polyester auf Basis von Dicarbonsäuren, Diolen und einem mindestens trifunktionellen Baustein, d.h. Säure oder Alkohol. Die Eigenschaften der so erhältlichen hyperverzweigten Polyester lassen sich sehr flexibel einstellen, jedoch wird in einigen Anwendungen eine verbesserte Härte gefordert.

Trotzdem war es wünschenswert, die Flexibilität der Synthese zu hoch- oder hyperverzweigten Polyestern weiter zu erhöhen, speziell bei der Einstellung von Funktionalitäten, Löslichkeitsverhalten und auch Schmelz- oder Glasübergangstemperaturen.

Aus US 5039760 ist es bekannt Polyester herzustellen aus einer aromatischen Dicarbonsäure, einem aliphatischen Glycol und 0,001 bis 1,0 mol% einer Verzweigungen erzeugenden Komponente. Als letztere Komponente wird 2,2,6,6-Tetramethylolcyclohexanol erwähnt, jedoch nicht in den explizit offenbarten Beispielen eingesetzt. Die dort beschriebenen Produkte weisen keinen bzw. lediglich einen geringen Verzweigungsgrad auf, so daß es sich nicht um hoch- oder hyperverzweigte Verbindungen im Sinne der vorliegenden Erfindung handelt.

Mit diesem Verfahren werden im Wesentlichen lineare Polyester erhalten, die lediglich eine geringe Anzahl an Verzweigungen enthalten und sich daher im Wesentlichen wie lineare Polyester verhalten.

In Plast. Massy (1963), (6), 18 - 20 wird die Umsetzung von Adipinsäure mit 2,2,6,6-Tetramethylolcyclohexanol in verschiedenen Stöchiometrien beschrieben.

Unter den dort beschriebenen Reaktionsbedingungen wird durch Etherbildung Formaldehyd abgespalten, was aus Toxizitätsgründen nachteilig ist. Obwohl die Reaktion lediglich bis zu geringen Umsätzen durchgeführt wird, wie sich aus den hohen OH-Zahlen der Produkte ersehen lässt, zeigen die Produkte meist eine starke Gelbildung, die es zu vermeiden gilt.

Bei der Umsetzung dieser Polyester mit Toluylendiisocyanat werden aromatische Polyurethane erhalten, die jedoch sofort gelieren und somit nicht mehr verarbeitbar, z.B. auf ein Substrat applizierbar sind. Als Beschichtungsmassen, z.B. für Lacke, sind derartige aromatische Polyurethane mithin nicht geeignet.

Der Erfindung lag die Aufgabe zugrunde, neue Verwendungen für mittels eines technisch einfachen und preiswerten Verfahrens hergestellte aliphatische oder aromatische, hochfunktionelle und hochverzweigte Polyester bereitzustellen.

Die Aufgabe konnte erfindungsgemäß gelöst werden durch die Verwendung von hyperverzweigten Polyestern, in denen β,β,β',β'-Tetra(hydroxymethyl)cycloalkanole einkondensiert werden.

Gegenstand der Erfindung ist somit die Verwendung von hochfunktionellen, hoch- oder hyperverzweigten Polyestern mit einem Molekulargewicht $M_n$ von mindestens 500 g/mol und einer Polydispersität $M_w/M_n$ von 1,2 - 100 erhältlich durch
Umsetzung

- genau einer aliphatischen, cycloaliphatischen, araliphatischen oder aromatischen Dicarbonsäure ($A_2$) oder von Derivaten derselben mit

- mindestens einem β,β,β',β'-Tetra(hydroxymethyl)cycloalkanol oder mindestens einem β,β,β',β'-Tetra(hydroxymethyl)cycloalkanol enthaltendem Reaktionsgemisch,

wobei
man das Verhältnis der reaktiven Gruppen im Reaktionsgemisch so wählt, dass man ein molares Verhältnis von OH-Gruppen zu Carboxygruppen oder deren Derivaten von 5:1 bis 1:5, vorzugsweise von 4:1 bis 1:4, besonders bevorzugt von 3:1 bis 1:3 und ganz besonders bevorzugt von 2:1 bis 1:2 einstellt,
als Haftvermittler in Druckfarben, als Thixotropiermittel, als Baustein zur Herstellung von Polyadditions- oder Polykondensationspolymeren, Lacken, Überzügen, Klebstoffen, Dichtmassen, Giesselastomeren oder Schaumstoffen, als Bestandteil von Bindemitteln in Klebstoffen, Druckfarben, Beschichtungen, Schaumstoffen, Überzügen und Lacken, gegebenenfalls mit Isocyanaten, Epoxygruppen-enthaltenden Bindemitteln oder Alkydharzen.

Gegenstand der Erfindung ist weiterhin ein Verfahren zur Herstellung solcher hochfunktionellen, hoch- oder hyperverzweigten Polyester.

Unter hyperverzweigten Polyestern werden im Rahmen dieser Erfindung unvernetzte Polyester mit Hydroxy- und Carboxygruppen verstanden, die sowohl strukturell als auch molekular uneinheitlich sind. Unvernetzt im Rahmen dieser Schrift bedeutet, daß ein Vernetzungsgrad von weniger als 15 Gew.%, bevorzugt von weniger als 10 Gew.%, bestimmt über den unlöslichen Anteil des Polymeren, vorhanden ist.

Der unlösliche Anteil des Polymeren wurde bestimmt durch vierstündige Extraktion mit dem gleichen Lösungsmittel, wie es für die Gelpermeationschromatographie verwendet wird, also Tetrahydrofuran, Dimethylacetamid oder Hexafluorisopropanol, je nachdem, in welchem Lösungsmittel das Polymer besser löslich ist, bevorzugt Tetrahydrofuran in einer Soxhlet-Apparatur und nachfolgende Trocknung des Rückstandes bis zur Gewichtskonstanzwägung des verbliebenen Rückstandes.

Hyperverzweigte Polyester können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von Dendrimeren und hyperverzweigten Polymeren siehe auch P.J. Flory, J. Am. Chem. Soc. 1952, 74, 2718 und H. Frey et al., Chemistry - A European Journal, 2000, 6, No. 14, 2499.

Unter "hyperverzweigt" wird im Zusammenhang mit der vorliegenden Erfindung verstanden, dass der Verzweigungsgrad (Degree of Branching, DB) 10 bis 99,9%, bevorzugt 20 bis 99%, besonders bevorzugt 20 - 95% beträgt. Der Verzweigungsgrad DB ist dabei definiert als

$$DB\ (\%) = (T + Z) / (T + Z + L) \times 100,$$

mit

T mittlere Anzahl der terminal gebundenen Monomereinheiten,
Z mittlere Anzahl der Verzweigungen bildenden Monomereinheiten,
L mittlere Anzahl der linear gebundenen Monomereinheiten.

Unter "Dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30 - 35.
Zu der Erfindung ist im Einzelnen das Folgende auszuführen:

Zu den Dicarbonsäuren ($A_2$) gehören beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-$\alpha,\omega$-dicarbonsäure, Dodecan-$\alpha,\omega$-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Weiterhin können auch aromatische Dicarbonsäuren, wie zum Beispiel Phthalsäure, Isophthalsäure oder Terephthalsäure verwendet werden. Auch ungesättigte Dicarbonsäuren, wie Maleinsäure, Fumarsäure, Itaconsäure, Mescaconsäure, Glutaconsäure oder Citraconsäure sind einsetzbar.

Die genannten Dicarbonsäuren können auch substituiert sein mit einem oder mehreren Resten, ausgewählt aus $C_1$-$C_{20}$-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, Trimethylpentyl, n-Nonyl, n-Decyl, n-Dodecyl, n-Tetradecyl, n-Hexadecyl, n-Octadecyl, oder n-Eicosyl, $C_2$-$C_{20}$-Alkenylgruppen, beispielsweise Butenyl, Hexenyl, Octenyl, Decenyl, Dodecenyl, Tetradecenyl, Hexadecenyl, Octadecenyl oder Eicosenyl,
$C_3$-$C_{12}$-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;
Alkylengruppen wie Methylen oder Ethyliden oder
$C_6$-$C_{14}$-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.
Als beispielhafte Vertreter für substituierte Dicarbonsäuren oder deren Derivate seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, 3,3-Dimethylglutarsäure, Dodecenylbernsteinsäure, Hexadecenylbernsteinsäure, Octadecenylbernsteinsäure sowie Umsetzungsprodukte von Polyisobutylenen mit einem Enophil ausgewählt aus der Gruppe Fumarsäuredichlorid, Fumarsäure, Maleinsäuredichlorid, Maleinsäureanhydrid und/oder Maleinsäure, bevorzugt mit Maleinsäureanhydrid oder Maleinsäuredichlorid, besonders bevorzugt mit Maleinsäureanhydrid, zu mit Polyisobutylen substituierten Bernsteinsäurederivaten, worin die Polyisobutylenylgruppe ein zahlenmittleres Molekulargewicht $M_n$ von 100 bis 100000 Dalton aufweisen kann. Diese Umsetzung erfolgt nach den dem Fachmann bekannten Verfahren und bevorzugt wie beschrieben in den deutschen Offenlegungsschriften DE-A 195 19 042, dort bevorzugt von S. 2, Z. 39 bis S. 4, Z. 2 und besonders bevorzugt von S. 3, Z. 35 - 58, und DE-A 43 19 671, dort bevorzugt von S. 2, Z. 30 bis Z. 68, und DE-A 43 19 672, dort bevorzugt von S. 2, Z. 44 bis S. 3, Z. 19, beschriebenen Verfahren zur Umsetzung von Polyisobutylenen mit Enophilen.
Die Dicarbonsäuren lassen sich entweder als solche oder in Form von Derivaten einsetzen.
Unter Derivaten werden bevorzugt verstanden

- die betreffenden Anhydride in monomerer oder auch polymerer Form,
- Mono- oder Dialkylester, bevorzugt Mono- oder Di-$C_1$-$C_4$-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen $C_1$-$C_4$-Alkylkomponenten, besonders bevorzugt gemischte Methylethylester.

Unter diesen sind die Anhydride und die Mono- oder Dialkylester bevorzugt, besonders bevorzugt sind die Anhydride und die Mono- oder Di-$C_1$-$C_4$-alkylester und ganz besonders bevorzugt sind die Anhydride.
$C_1$-$C_4$-Alkyl bedeutet im Rahmen dieser Schrift Methyl, Ethyl, iso-Propyl, n-Propyl, n-Butyl, iso-Butyl, sek-Butyl und tert-Butyl, bevorzugt Methyl, Ethyl und n-Butyl, besonders bevorzugt Methyl und Ethyl und ganz besonders bevorzugt Methyl.
Im Rahmen der vorliegenden Erfindung ist es auch möglich, ein Gemisch aus einer Dicarbonsäure und einem oder mehreren ihrer Derivate einzusetzen. Gleichfalls ist es im Rahmen der vorliegenden Erfindung möglich, ein Gemisch mehrerer verschiedener Derivate von einer Dicarbonsäure einzusetzen.
Besonders bevorzugt setzt man Malonsäure, Bernsteinsäure, Glutarsäure, Adipinsäure, Sebacinsäure, Octadecenylbernsteinsäureanhydrid, 1,2-, 1,3- oder 1,4-Cyclohexandicarbonsäuren (Hexahydrophthalsäuren als cis- oder trans-Verbindungen oder deren Gemische), Phthalsäure, Isophthalsäure, Terephthalsäure oder deren Anhydride oder

Mono- oder Dialkylester ein.

Es stellt ein bevorzugte Ausführungsform der vorliegenden Erfindung dar, als Dicarbonsäuren ($A_2$) zumindest teilweise, bevorzugt ausschließlich solche Verbindungen einzusetzen, in denen die beiden Carboxygruppen an ein Ringsystem, bevorzugt ein cycloaliphatisches oder aromatisches Ringsystem gebunden sind. Beispiele dafür sind cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure, Phthalsäure, Isophthalsäure oder Terephthalsäure, bevorzugt sind cis- und trans-Cyclohexan-1,2-dicarbonsäure, Phthalsäure oder Terephthalsäure oder deren Derivate, bevorzugt deren Anhydride oder Mono- oder Dialkylester.

Es stellt einen Vorteil dieser Ausführungsform dar, daß die hyperverzweigten Polyester auf Basis der ein Ringsystem enthaltenden Dicarbonsäuren und β,β,β',β'-Tetra(hydroxymethyl)cycloalkanol Polyester mit einer besonders hohen Glasübergangstemperatur ergeben, so daß sich diese beispielsweise sehr gut für Beschichtungssysteme eignen.

Die hyperverzweigten Polyester enthalten mindestens ein β,β,β',β'-Tetra(hydroxymethyl)cycloalkanol. Es kann auch ein Gemisch aus mehreren β,β,β',β'-Tetra(hydroxymethyl)cycloalkanolen eingesetzt werden, beispielsweise bis zu vier, bevorzugt bis zu drei, besonders bevorzugt bis zu zwei. Ganz besonders bevorzugt wird genau ein β,β,β',β'-Tetra(hydroxymethyl)cycloalkanol eingesetzt.

Bei den β,β,β',β'-Tetra(hydroxymethyl)cycloalkanolen handelt es sich um Cycloalkanole, die in β-Position zur sekundären Hydroxygruppe Hydroxymethylgruppen tragen.

Die Bezeichnung der Atomgruppen im Cycloalkanol sei wie folgt:

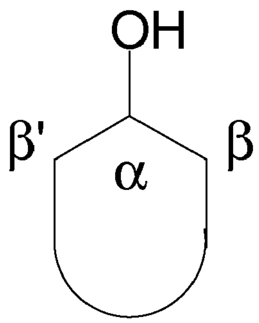

Bevorzugt handelt es sich dabei um zugrundeliegende Cyclolalkanole mit einer Ringgröße von 4 bis 12, bevorzugt von 5 bis 12, ganz besonders bevorzugt von 6 bis 12.

Bevorzugte β,β,β',β'-Tetra(hydroxymethyl)cycloalkanole sind 2,2,6,6-Tetrakis (hydroxymethyl) cyclohexan-1-ol, 2,2,5,5-Tetrakis (hydroxymethyl) cyclopentan-1-ol, 2,2,8,8-Tetrakis (hydroxymethyl) cyclooctan-1-ol und 2,2,12,12-Tetrakis (hydroxymethyl) cyclododecan-1-ol. Besonders bevorzugt sind 2,2,6,6-Tetrakis (hydroxymethyl) cyclohexan-1-ol, 2,2,5,5-Tetrakis (hydroxymethyl) cyclopentan-1-ol und 2,2,12,12-Tetrakis (hydroxymethyl) cyclododecan-1-ol, ganz besonders bevorzugt sind 2,2,6,6-Tetrakis (hydroxymethyl) cyclohexan-1-ol und 2,2,5,5-Tetrakis (hydroxymethyl) cyclopentan-1-ol und insbesondere 2,2,6,6-Tetrakis (hydroxymethyl) cyclohexan-1-ol.

Die Herstellung dieser Verbindungen kann beispielsweise erfolgen durch eine Aldolreaktion des korrespondierenden Cycloalkanons mit Formaldehyd, gefolgt von einer gekreuzten Cannizzaro-Reaktion mit Formaldehyd. Bevorzugt kann bei der Reaktion ausgegangen werden von Cyclopentanon, Cyclohexanon, Cyclooctanon oder Cyclododecanon. Eine mögliche Herstellung einiger β,β,β',β'-Tetra(hydroxymethyl)cycloalkanole ist beschrieben in DE-OS 2223136 und kann analog auf die Herstellung anderer β,β,β',β'-Tetra(hydroxymethyl)cycloalkanole übertragen werden.

Es ist auch möglich β,β,β',β'-Tetra(hydroxymethyl)cycloalkanole enthaltende Reaktionsgemische einzusetzen, in denen nicht alle vier möglichen β-Positionen des Cycloalkanols hydroxymethyliert sind, sondern die einen gewissen Anteil an lediglich dreifach oder sogar noch weniger hydroxymethyliertem Produkt enthalten. Beispiele für derartige Produkte sind β,β,β'-Tri(hydroxymethyl)cycloalkanol, β,β'-Di(hydroxymethyl)cycloalkanol oder β,β-Di(hydroxymethyl)cycloalkanol. Denkbar ist auch, daß anstelle der sekundären Hydroxygruppe eine Carbonylgruppe vorliegt, so daß das Reaktionsgemisch einen Anteil von α,α,α',α'-Tetra(hydroxymethyl)cycloalkanon, α,α,α'-Tri(hydroxymethyl)cycloalkanon, α,α'-Di(hydroxymethyl)cycloalkanon oder α,α-Di(hydroxymethyl)cycloalkanon enthalten kann. Die genannten Produkte sind im Reaktionsgemisch in der Regel zu nicht mehr als 10 Gew% enthalten, bevorzugt zu nicht mehr als 5 Gew%. Denkbar sind derartige Reaktionsgemische, die einen mittleren Hydroxymethylierungsgrad von mindestens 3,5, bevorzugt mindestens 3,6, besonders bevorzugt mindestens 3,8 und ganz besonders bevorzugt mindestens 3,9 aufweisen. Diese Reaktionsgemische können erfindungsgemäß ebenfalls anstelle der β,β,β',β'-Tetra(hydroxymethyl)cycloalkanole eingesetzt werden. Die in dieser Schrift für β,β,β',β'-Tetra(hydroxymethyl)cycloalkanole gemachten Angaben können ohne weiteres auf die diese enthaltenden Reaktionsgemische übertragen werden.

Das Verfahren kann in Substanz oder in Gegenwart eines Lösemittels durchgeführt werden. Als Lösemittel geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders Ether geeignet, wie beispielsweise Dioxan oder Tetrahydrofuran und Ketone wie beispielsweise Methylethylketon und Methylisobutylketon.

Die Menge an zugesetztem Lösemittel beträgt mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlichen langen Umsetzungsdauern führt.

In einer bevorzugten Ausführungsform wird die Reaktion frei von Lösungsmittel durchgeführt.

Zur Durchführung des Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, $MgSO_4$ und $Na_2SO_4$. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Weiterhin kann die Abtrennung durch Strippen erfolgen, beispielsweise durch Durchleiten eines unter den Reaktionsbedingungen inerten Gases durch das Reaktionsgemisch, gegebenenfalls zusätzlich zu einer Destillation. Als Inertgase eignen sich vorzugsweise Stickstoff, Edelgase, Kohlendioxid oder Verbrennungsgase.

Man kann das Verfahren in Abwesenheit von Katalysatoren durchführen. Vorzugsweise arbeitet man jedoch in Gegenwart von mindestens einem Katalysator. Dies sind bevorzugt saure anorganische, metallorganische oder organische Katalysatoren oder Gemische aus mehreren sauren anorganischen, metallorganischen oder organischen Katalysatoren.

Als saure Katalysatoren werden im Rahmen dieser Schrift Lewis-Säuren angesehen, also solche Verbindungen gemäß Römpps Chemie-Lexikon, Stichwort "Säure-Base-Begriff', die ein Elektronenpaar in die Valenzschale eines ihrer Atome aufnehmen können.

Als saure anorganische Katalysatoren im Sinne der vorliegenden Erfindung sind beispielsweise Schwefelsäure, Sulfate und Hydrogensulfate, wie Natriumhydrogensulfat, Phosphorsäure, Phosphonsäure, hypophosphorige Säure, Aluminiumsulfathydrat, Alaun, saures Kieselgel ($pH \leq 6$, insbesondere $\leq 5$) und saures Aluminiumoxid zu nennen. Weiterhin sind beispielsweise Alumiumverbindungen der allgemeinen Formel $Al(OR^1)_3$ und Titanate der allgemeinen Formel $Ti(OR^1)_4$ als saure anorganische Katalysatoren einsetzbar, wobei die Reste $R^1$ jeweils gleich oder verschieden sein können und unabhängig voneinander gewählt sind aus

$C_1$-$C_{20}$-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl, n-Decyl, n-Dodecyl, n-Hexadecyl oder n-Octadecyl.

$C_3$-$C_{12}$-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste $R^1$ in $Al(OR^1)_3$ bzw. $Ti(OR^1)_4$ jeweils gleich und gewählt aus n-Butyl, Isopropyl, 2-Ethylhexyl, n-Octyl, Decyl oder Dodecyl.

Bevorzugte saure metallorganische Katalysatoren sind beispielsweise gewählt aus Dialkylzinnoxiden $R^1_2SnO$ oder Dialkylzinndiestern $R^1_2Sn(OR^2)_2$ wobei $R^1$ wie oben stehend definiert ist und gleich oder verschieden sein kann.

$R^2$ kann die gleichen Bedeutungen haben wie $R^1$ und zusätzlich $C_6$-$C_{12}$-Aryl sein, beispielsweise Phenyl, o-, m- oder p-Tolyl, Xylyl oder Naphthyl. $R^2$ kann jeweils gleich oder verschieden sein.

Beispiele sind für zinnorganische Katalysatoren sind Zinn(II)-n-octanoat, Zinn-(II)-2-ethylhexanoat, Zinn-(II)-laurat, Dibutylzinnoxid, Diphenylzinnoxid, Dibutylzinndichlorid, Dibutylzinndiacetat, Dibutylzinndilaurat, Dibutylzinndimaleat oder Dioctylzinndiacetat. Denkbar sind auch antimon-, wismut-. oder aluminiumorganische Katalysatoren.

Besonders bevorzugte Vertreter für saure metallorganische Katalysatoren sind Dibutylzinnoxid, Diphenylzinnoxid und Dibutylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist

es möglich, solche organische oder metallorganische oder auch anorganische Katalysatoren, die in Form diskreter Moleküle vorliegen, in immobilisierter Form, zum Beispiel an Kieselgel oder an Zeolithen, einzusetzen.

Wünscht man saure anorganische, metallorganische oder organische Katalysatoren einzusetzen, so setzt man bevorzugt 1 bis 10000 Gew.ppm Katalysator, besonders bevorzugt 2 bis 5000 Gew.ppm bezogen auf die Gesamtmasse der hydroxy- und der carboxygruppenhaltigen Verbindungen ein.

Es ist auch möglich, als Katalysatoren Enzyme einzusetzen, wenn deren Einsatz auch weniger bevorzugt ist.

Entsprechend einsetzbare Enzyme sind beispielsweise ausgewählt unter Hydrolasen (E.C. 3.-.-.-), und unter diesen besonders unter den Esterasen (E.C. 3.1.-.-), Lipasen (E.C. 3.1.1.3), Glykosylasen (E.C. 3.2.-.-) und Proteasen (E.C. 3.4.-.-) in freier oder auf einem Träger chemisch oder physikalisch immobilisierter Form, bevorzugt Lipasen, Esterasen oder Proteasen und besonders bevorzugt Esterasen (E.C. 3.1.-.-). Ganz besonders bevorzugt sind Novozyme 435 (Lipase aus Candida antarctica B) oder Lipase aus Alcaligenes sp., Aspergillus sp., Mucor sp., Penicilium sp., Geotricum sp., Rhizopus sp., Burkholderia sp., Candida sp., Pseudomonas sp., Thermomyces sp. oder Schweinepankreas, insbesondere bevorzugt sind Lipase aus Candida antarctica B oder aus Burkholderia sp.

Der Enzymgehalt im Reaktionsmedium liegt in der Regel im Bereich von etwa 0,1 bis 10 Gew.-%, bezogen auf die Summe der eingesetzten Komponenten ($A_2$) und β,β,β',β'-Tetra(hydroxymethyl)cycloalkanol.

Das Verfahren wird vorzugsweise unter Inertgasatmosphäre, d.h. einem unter den Reaktionsbedingungen inerten Gas, durchgeführt, beispielsweise unter Kohlendioxid, Verbrennungsgasen, Stickstoff oder Edelgasen, unter denen insbesondere Argon zu nennen ist.

Das Verfahren wird bei Temperaturen von 60 bis 250°C durchgeführt. Wird ein Enzym als Katalysator eingesetzt, so beträgt die Reaktionstemperatur in der Regel nicht mehr als 120 °C, bevorzugt nicht mehr als 100 °C und besonders bevorzugt nicht mehr als 80 °C.

Werden andere als Enzyme als Katalysatoren eingesetzt, so beträgt die Reaktionstemperatur mindestens 160 °C, bevorzugt 160 bis 220 °C und besonders bevorzugt 160 bis 190 °C.

Die Druckbedingungen des Verfahrens sind in der Regel unkritisch. Man kann bei deutlich verringertem Druck arbeiten, beispielsweise bei 10 bis 500 mbar. Das Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei verringertem oder Atmosphärendruck, besonders bevorzugt bei Atmosphärendruck.

Die Umsetzungsdauer des Verfahrens beträgt üblicherweise 10 Minuten bis 48 Stunden, bevorzugt 30 Minuten bis 24 Stunden und besonders bevorzugt 1 bis 12 Stunden.

Wird die Reaktion enzymatisch durchgeführt, so erfolgt sie im Allgemeinen bei 0 bis 100°C, bevorzugt 20 bis 80 °C, besonders bevorzugt 20 bis 70°C, ganz besonders bevorzugt 20 bis 60 °C. Die Reaktionszeit hängt unter anderem von der Temperatur, der verwendeten Menge und der Aktivität des Enzymkatalysators und vom geforderten Umsatz ab sowie von den Komponenten. In der Regel sind dafür 1 bis 72 Stunden, bevorzugt 3 bis 36 und besonders bevorzugt 3 bis 24 Stunden ausreichend.

Bei der Umsetzung der Komponenten $A_2$ und β,β,β',β'-Tetra(hydroxymethyl)cycloalkanol wählt man das Verhältnis der reaktiven Gruppen im Reaktionsgemisch so, dass man ein molares Verhältnis von OH-Gruppen zu Carboxygruppen oder deren Derivaten von 5:1 bis 1:5, vorzugsweise von 4:1 bis 1:4, besonders bevorzugt von 3:1 bis 1:3 und ganz besonders bevorzugt von 2:1 bis 1:2 einstellt.

Bei der Berechung des Anteils der Hydroxygruppen in der Reaktion ist zu berücksichtigen, daß in der erfindungsgemäßen Komponente β,β,β',β'-Tetra(hydroxymethyl)cycloalkanol die sekundäre Hydroxygruppe am Cycloalkanol unter den angegebenen Reaktionsbedingungen nicht oder nur unwesentlich reagiert. Somit ist für die Umsetzung β,β,β',β'-Tetra(hydroxymethyl)cycloalkanol faktisch lediglich als tetrafunktionelles Polyol zu betrachten.

Nach beendeter Reaktion lassen sich die hochfunktionellen hoch- und hyperverzweigten Polyester leicht isolieren, beispielsweise durch Abfiltrieren des Katalysators und gegebenenfalls Abziehen des Lösemittels, wobei man das Abziehen des Lösemittels üblicherweise bei vermindertem Druck durchführt. Weitere gut geeignete Aufarbeitungsmethoden sind Ausfällen des Polymeren nach Zugabe von Wasser und anschließendes Waschen und Trocknen.

Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 - 50 Gew%, bevorzugt 0,5 bis 25 Gew%, besonders bevorzugt 1 - 10 Gew% bei Temperaturen von beispielsweise 10 bis 200°C, bevorzugt 20 bis 180 °C und besonders bevorzugt 30 bis 160 °C unterworfen werden.

Dies kann durch Zugabe des pulver- oder granulatförmigen Entfärbungsmittels zum Reaktionsgemisch und nachfolgender Filtration oder durch Überleiten des Reaktionsgemisches über eine Schüttung des Entfärbungsmittels in Form beliebiger, geeigneter Formkörper erfolgen.

Die Entfärbung des Reaktionsgemisches kann an beliebiger Stelle des Aufarbeitungsverfahrens erfolgen, beispielsweise auf der Stufe des rohen Reaktionsgemisches oder nach gegebenenfalls erfolgter Vorwäsche, Neutralisation, Wäsche oder Lösungsmittelentfernung.

Das Reaktionsgemisch kann weiterhin einer Vorwäsche und/oder einer Neutralisation und/oder einer Nachwäsche unterworfen werden, bevorzugt lediglich einer Neutralisation. Gegebenenfalls können Neutralisation und Vorwäsche in der Reihenfolge auch vertauscht werden.

Aus der wässrigen Phase der Wäschen und/oder Neutralisation können enthaltene Wertprodukte durch Ansäuern und Extraktion mit einem Lösungsmittel zumindest teilweise wiedergewonnen und von Neuem eingesetzt werden.

Zur Vor- oder Nachwäsche wird das Reaktionsgemisch in einem Waschapparat mit einer Waschflüssigkeit, beispielsweise Wasser oder einer 5 - 30 Gew%-igen, bevorzugt 5 - 20, besonders bevorzugt 5 - 15 Gew%-igen Kochsalz-, Kaliumchlorid-, Ammoniumchlorid-, Natriumsulfat- oder Ammoniumsulfatlösung, bevorzugt Wasser oder Kochsalzlösung, behandelt.

Das Mengenverhältnis Reaktionsgemisch : Waschflüssigkeit beträgt in der Regel 1: 0,1 - 1, bevorzugt 1 : 0,2 - 0,8, besonders bevorzugt 1 : 0,3 - 0,7.

Die Wäsche oder Neutralisation kann beispielsweise in einem Rührbehälter oder in anderen herkömmlichen Apparaturen, z.B. in einer Kolonne oder Mixer-Settler-Apparatur, durchgeführt werden.

Verfahrenstechnisch können für eine Wäsche oder Neutralisation im Verfahren alle an sich bekannten Extraktions- und Waschverfahren und -apparate eingesetzt werden, z.B. solche, die in Ullmann's Encyclopedia of Industrial Chemistry, 6th ed, 1999 Electronic Release, Kapitel: Liquid - Liquid Extraction -Apparatus, beschrieben sind. Beispielsweise können dies ein- oder mehrstufige, bevorzugt einstufige Extraktionen, sowie solche in Gleich- oder Gegenstromfahrweise, bevorzugt Gegenstromfahrweise sein.

Vorzugsweise werden Siebboden- oder gepackte Füllkörperkolonnen, Rührbehälter oder Mixer-Settler-Apparate, sowie gepulste Kolonnen oder solche mit rotierenden Einbauten eingesetzt. Die Vorwäsche wird bevorzugt dann eingesetzt, wenn Metallsalze, bevorzugt zinnorganische Verbindungen als Katalysator (mit)verwendet werden.

Eine Nachwäsche kann zur Entfernung von Base- oder Salzspuren aus dem neutralisierten Reaktionsgemisch vorteilhaft sein.

Zur Neutralisation kann das gegebenenfalls vorgewaschene Reaktionsgemisch, das noch geringe Mengen an Katalysator und/oder Carbonsäure enthalten kann, mit einer 5 - 25, bevorzugt 5 - 20, besonders bevorzugt 5 - 15 Gew%igen wäßrigen Lösung einer Base, wie beispielsweise Alkali- oder Erdalkalimetalloxide, -hydroxide, -carbonate oder -hydrogencarbonate, bevorzugt Natronlauge, Kalilauge, Natriumhydrogencarbonat, Natriumcarbonat, Kaliumhydrogencarbonat, Kalziumhydroxid, Kalkmilch, Ammoniak, Ammoniakwasser oder Kaliumcarbonat, der gegebenenfalls 5 - 15 Gew% Kochsalz, Kaliumchlorid, Ammoniumchlorid oder Ammoniumsulfat zugesetzt sein können, besonders bevorzugt mit Natronlauge oder Natronlauge-Kochsalz-Lösung, neutralisiert werden. Der Neutralisationsgrad beträgt bevorzugt 5 bis 60 Mol%, vorzugsweise 10 bis 40 Mol%, besonders bevorzugt 20 bis 30 Mol%, bezogen auf die Säuregruppen enthaltenden Monomere.

Die Zugabe der Base erfolgt in einer Weise, daß die Temperatur im Apparat nicht über 60 °C ansteigt, bevorzugt zwischen 20 und 35 °C beträgt und der pH-Wert 4 - 13 beträgt. Die Abfuhr der Neutralisationswärme erfolgt vorzugsweise durch Kühlung des Behälters mit Hilfe von innenliegenden Kühlschlangen oder über eine Doppelwandkühlung.

Das Mengenverhältnis Reaktionsgemisch : Neutralisationsflüssigkeit beträgt in der Regel 1: 0,1 - 1, bevorzugt 1 : 0,2 - 0,8, besonders bevorzugt 1 : 0,3 - 0,7.

Hinsichtlich der Apparatur gilt das oben Gesagte.

In einer bevorzugten Ausführung kann jedoch auf eine Wäsche, Neutralisierung und Entfärbung verzichtet werden.

Falls ein Lösungsmittel im Reaktionsgemisch enthalten ist, so kann dieses durch Destillation im Wesentlichen entfernt werden. Bevorzugt wird gegebenenfalls enthaltenes Lösungsmittel nach Wäsche und/oder Neutralisation aus dem Reaktionsgemisch entfernt, falls gewünscht kann dieses aber auch vor der Wäsche beziehungsweise Neutralisation erfolgen.

Dazu kann das Reaktionsgemisch mit einer derartigen Menge an Lagerstabilisator versetzt werden, daß nach Abtrennung des Lösungsmittels 100 - 500, bevorzugt 200 - 500 und besonders bevorzugt 200 - 400 ppm davon im Zielester (Rückstand) enthalten sind.

Die destillative Abtrennung der Hauptmenge an gegebenenfalls verwendetem Lösungsmittel oder niedrigsiedenden Nebenprodukten erfolgt beispielsweise in einem Rührkessel mit Doppelwandheizung und/oder innenliegenden Heizschlangen unter vermindertem Druck, beispielsweise bei 20 - 700 mbar, bevorzugt 30 bis 500 und besonders bevorzugt 50 - 150 mbar und einer Temperatur von 40 - 120 °C.

Selbstverständlich kann die Destillation auch in einem Fallfilm- oder Dünnschichtverdampfer erfolgen. Dazu wird das Reaktionsgemisch, bevorzugt mehrmals im Kreislauf, unter vermindertem Druck, beispielsweise bei 20 - 700 mbar, bevorzugt 30 bis 500 und besonders bevorzugt 50 - 150 mbar und einer Temperatur von 40 - 80 °C durch den Apparat geführt.

Vorteilhaft kann ein unter den Reaktionsbedingungen inertes Gas in den Destillationsapparat eingeleitet werden, beispielsweise 0,1 - 1, bevorzugt 0,2 - 0,8 und besonders bevorzugt 0,3 - 0,7 $m^3$ sauerstoffhaltiges Gas pro $m^3$ Reaktionsgemisch und Stunde.

Der Restlösungsmittelgehalt im Rückstand beträgt nach der Destillation in der Regel unter 5 Gew%, bevorzugt 0,5 - 5% und besonders bevorzugt 1 bis 3 Gew%.

Das abgetrennte Lösungsmittel wird kondensiert und bevorzugt wiederverwendet.

Falls erforderlich kann zusätzlich oder anstelle der Destillation eine Lösungsmittelstrippung durchgeführt werden.

Dazu wird das Produkt, das noch geringe Lösungsmittelmengen oder niedrigsiedende Verunreinigungen enthalten kann, auf 50 - 150 °C, bevorzugt 80 - 150 °C erwärmt und die restlichen Lösungsmittelmengen mit einem geeigneten Gas in einer geeigneten Apparatur entfernt. Zur Unterstützung kann gegebenenfalls auch ein Vakuum angelegt werden.

Geeignete Apparaturen sind beispielsweise Kolonnen von an sich bekannter Bauart, die die üblichen Einbauten, z.B. Böden, Schüttungen oder gerichtete Packungen, bevorzugt Schüttungen aufweisen. Als Kolonneneinbauten kommen prinzipiell alle gängigen Einbauten in Betracht, beispielsweise Böden, Packungen und/oder Füllkörper. Von den Böden sind Glockenböden, Siebböden, Ventilböden, Thormannböden und/oder Dual-Flow-Böden bevorzugt, von den Schüttungen sind solche mit Ringen, Wendeln, Sattelkörpern, Raschig-, Intos- oder Pall-Ringen, Barrel- oder Intalox-Sätteln, Top-Pak etc. oder Geflechten, bevorzugt.

Denkbar ist hier auch ein Fallfilm-, Dünnfilm- oder Wischfilmverdampfer, wie z.B. ein Luwa-, Rotafilm- oder Sambayverdampfer, der als Spritzschutz beispielsweise mit einem Demister ausgerüstet sein kann.

Geeignete Gase sind unter den Strippbedingungen inerte Gase insbesondere solche, die auf 50 bis 100 °C temperiert sind.

Die Strippgasmenge beträgt beispielsweise 5 - 20, besonders bevorzugt 10 - 20 und ganz besonders bevorzugt 10 bis 15 $m^3$ Strippgas pro $m^3$ Reaktionsgemisch und Stunde.

Falls notwendig kann das Veresterungsgemisch in einem beliebigen Stadium des Aufarbeitungsverfahrens, bevorzugt nach Wäsche/Neutralisation und gegebenenfalls erfolgter Lösungsmittelentfernung einer Filtration unterworfen werden, um ausgefallene Spuren an Salzen sowie gegebenenfalls enthaltenem Entfärbungsmittel zu entfernen.
Auf eine Vor- oder Nachwäsche wird bevorzugt verzichtet, lediglich ein Filtrationsschritt kann sinnvoll sein. Ebenfalls wird auf eine Neutralisation bevorzugt verzichtet.

Die Abfolge der Schritte Vorwäsche, Nachwäsche, sowie Lösungsmittelentfernung und Filtration ist dabei beliebig.

Ein weiterer Gegenstand der vorliegenden Erfindung sind die nach dem erfindungsgemäßen Verfahren erhältlichen hochfunktionellen, hoch- oder hyperverzweigten Polyester.

Die Polyester haben ein Molekulargewicht $M_n$ von mindestens 500, bevorzugt mindestens 600 und besonders bevorzugt mindestens 700 g/mol. Die obere Grenze des Molekulargewichts $M_n$ ist bevorzugt 100.000 g/mol, besonders bevorzugt beträgt es nicht mehr als 80.000 und ganz besonders bevorzugt nicht mehr als 30.000 g/mol.

Die Angaben zur Polydispersität sowie zum zahlenmittleren und gewichtsmittleren Molekulargewicht $M_n$ und $M_w$ beziehen sich hier auf gelpermeationschromatographische Messungen, wobei Polymethylmethacrylat als Standard und Tetrahydrofuran, Dimethylacetamid oder Hexafluorisopropanol als Elutionsmittel verwendet wurden. Die Methode ist im Analytiker Taschenbuch Bd. 4, Seiten 433 bis 442 , Berlin 1984 beschrieben.

Die Polydispersität der Polyester beträgt in der Regel mindestens 1,2, bevorzugt mindestens 1,4 und besonders bevorzugt mindestens 1,5.

Die Polydispersität der Polyester beträgt in der Regel nicht mehr als 100, bevorzugt nicht mehr als 75, besonders bevorzugt nicht mehr als 50, ganz besonders bevorzugt nicht mehr als 40, insbesondere nicht mehr als 30 und speziell nicht mehr als 15.

Die hochfunktionellen hoch- und hyperverzweigten Polyester sind carboxyterminiert, carboxy- und Hydroxygruppen-terminiert und vorzugsweise Hydroxygruppen-terminiert und können zur Herstellung z.B. von Klebstoffen, Druckfarben, Beschichtungen, Schaumstoffen, Überzügen und Lacken vorteilhaft eingesetzt werden. Bevorzugt ist die Verwendung in Lacken.

Ein weiterer Aspekt der vorliegenden Erfindung ist die Verwendung der hochfunktionellen, hoch- und hyperverzweigten Polyester zur Herstellung von Polyadditions- oder Polykondensationsprodukten, beispielsweise Polycarbonaten, (cyclo)aliphatischen Polyurethanen, Polyestern und Polyethern. Bevorzugt ist die Verwendung der Hydroxygruppen-terminierten hochfunktionellen, hoch- und hyperverzweigten Polyester zur Herstellung von Polycarbonaten, Polyestern oder (cyclo)aliphatischen Polyurethanen.

Ein weiterer Aspekt der vorliegenden Erfindung ist die Verwendung der hochfunktionellen hoch- und hyperverzweigten Polyester sowie der aus hochfunktionellen, hoch- und hyperverzweigten Polyestern hergestellten Polyadditions- oder Polykondensationsprodukte als Komponente von Druckfarben, Klebstoffen, Beschichtungen, Schaumstoffen, Überzügen und Lacken.

Ein weiterer Aspekt der vorliegenden Erfindung sind Druckfarben, Klebstoffe, Beschichtungen, Schaumstoffe, Überzüge und Lacke, enthaltend mindestens einen hochfunktionellen hoch- und hyperverzweigten Polyester oder aus

den hochfunktionellen, hoch- und hyperverzweigten Polyestern hergestellte Polyadditions- oder Polykondensationsprodukte, die sich durch gute anwendungstechnische Eigenschaften auszeichnen.

Ein weiterer bevorzugter Aspekt der vorliegenden Erfindung sind Druckfarben, insbesondere Verpackungsdruckfarben für den Flexo- und/oder Tiefdruck, die mindestens ein Lösemittel oder ein Gemisch verschiedener Lösemittel, mindestens ein Farbmittel, mindestens ein polymeres Bindemittel sowie optional weitere Zusatzstoffe umfasst, wobei es sich bei mindestens einem der polymeren Bindemittel um einen hoch- und hyperverzweigten hochfunktionellen Polyester handelt.

Die hoch- und hyperverzweigten Polyester können im Rahmen der vorliegenden Erfindung auch im Gemisch mit anderen Bindemitteln eingesetzt werden. Beispiele für weitere Bindemittel für die Druckfarben umfassen Polyvinylbutyral, Nitrocellulose, Polyamide, Polyurethane, Polyacrylate oder Polyacrylat-Copolymere. Besonders vorteilhaft hat sich die Kombination der hoch- und hyperverzweigten Polyester mit Nitrocellulose erwiesen. Die Gesamtmenge aller Bindemittel in der Druckfarbe beträgt üblicherweise 5 - 35 Gew.-%, bevorzugt 6 - 30 Gew.-% und besonders bevorzugt 10 - 25 Gew.-% bezogen auf die Summe aller Bestandteile. Das Verhältnis von hoch- und hyperverzweigtem Polyester zu der Gesamtmenge aller Bindemittel liegt üblicherweise im Bereich von 30 Gew.-% bis 100 Gew.-%, bevorzugt mindestens 40 Gew.-%, wobei aber die Menge an hoch- und hyperverzweigtem Polyester im Regelfalle 3 Gew.%, bevorzugt 4 Gew.% und besonders bevorzugt 5 Gew.% bezüglich der Summe aller Bestandteile der Druckfarbe nicht unterschreiten sollte.

Es kann ein einzelnes Lösemittel oder auch ein Gemisch mehrerer Lösemittel eingesetzt werden. Als Lösemittel prinzipiell geeignet sind die üblichen Lösemittel für Druckfarben, insbesondere für Verpackungsdruckfarben. Insbesondere geeignet als Lösemittel für die Druckfarbe sind Alkohole wie beispielsweise Ethanol,
1-Propanol, 2-Propanol, Ethylenglykol, Propylenglykol, Diethylenglykol, substituierte Alkohole wie beispielsweise Ethoxypropanol, Ester wie beispielsweise Ethylacetat, Isopropylacetat, n-Propyl oder n-Butylacetat. Als Lösungsmittel ist weiterhin Wasser prinzipiell geeignet. Besonders bevorzugt als Lösemittel sind Ethanol bzw. Gemische, die zu einem überwiegenden Teil aus Ethanol bestehen, und Ethylacetat. Unter den prinzipiell möglichen Lösemitteln trifft der Fachmann je nach den Löslichkeitseigenschaften des Polyesters und der gewünschten Eigenschaften der Druckfarbe eine geeignete Auswahl. Es werden üblicherweise 40 bis 80 Gew.% Lösemittel bezüglich der Summe aller Bestandteile der Druckfarbe eingesetzt.

Als Farbmittel können die üblichen Farbstoffe, insbesondere übliche Pigmente eingesetzt werden. Beispiele sind anorganische Pigmente wie beispielsweise Titandioxidpigmente oder Eisenoxidpigmente, Interferenzpigmente, Ruße, Metallpulver wie insbesondere Aluminium, Messing oder Kupferpulver, sowie organische Pigmente wie Azo-, Phthalocyanin- oder Isoindolin-Pigmente. Es können selbstverständlich auch Gemische verschiedener Farbstoffe oder Farbmittel eingesetzt werden sowie außerdem lösliche organische Farbstoffe. Es werden üblicherweise 5 bis 25 Gew. % Farbmittel bezüglich der Summe aller Bestandteile eingesetzt.

Die Verpackungsdruckfarbe kann optional weitere Additive und Hilfsstoffe umfassen. Beispiele für Additive und Hilfsstoffe sind Füllstoffe wie Calciumcarbonat, Aluminiumoxidhydrat oder Aluminium- bzw. Magnesiumsilikat. Wachse erhöhen die Abriebfestigkeit und dienen der Erhöhung der Gleitfähigkeit. Beispiele sind insbesondere Polyethylenwachse, oxidierte Polyethylenwachse, Petroleumwachse oder Ceresinwachse. Fettsäureamide können zur Erhöhung der Oberflächenglätte eingesetzt werden. Weichmacher dienen der Erhöhung der Elastizität des getrockneten Films. Beispiele sind Phthalsäureester wie Dibutylphthalat, Diisobutylphthalat, Dioctylphthalat, Citronensäureester oder Ester der Adipinsäure. Zum Dispergieren der Pigmente können Dispergierhilfsmittel eingesetzt werden. Bei der Druckfarbe kann vorteilhaft auf Haftvermittler verzichtet werden, ohne dass die Verwendung von Haftvermittlern damit ausgeschlossen sein soll. Die Gesamtmenge aller Additive und Hilfsstoffe übersteigt üblicherweise nicht 20 Gew.% bezüglich der Summe aller Bestandteile der Druckfarbe und beträgt bevorzugt 0 - 10 Gew.%.

Die Herstellung der Verpackungsdruckfarbe kann in prinzipiell bekannter Art und Weise durch intensives Vermischen bzw. Dispergieren der Bestandteile in üblichen Apparaturen wie beispielsweise Dissolvern, Rührwerkskugelmühlen oder einem Dreiwalzenstuhl erfolgen. Vorteilhaft wird zunächst eine konzentrierte Pigmentdispersion mit einem Teil der Komponenten und einem Teil des Lösemittels hergestellt, die später mit weiteren Bestandteilen und weiterem Lösemittel zur fertigen Druckfarbe weiter verarbeitet wird.

Ein weiterer bevorzugter Aspekt der vorliegenden Erfindung sind Drucklacke, die mindestens ein Lösemittel oder ein Gemisch verschiedener Lösemittel, mindestens ein polymeres Bindemittel sowie optional weitere Zusatzstoffe umfassen, wobei es sich bei mindestens einem der polymeren Bindemittel um einen hoch- und hyperverzweigten hochfunktionellen Polyester handelt, sowie die Verwendung der Drucklacke zum Grundieren, als Schutzlack sowie zum Herstellen von Mehrschichtmaterialien.

Die Drucklacke enthalten naturgemäß keine Farbmittel, weisen aber abgesehen davon die gleichen Bestandteile auf wie die bereits geschilderten Druckfarben. Die Mengen der übrigen Komponenten erhöhen sich dementsprechend.

Überraschenderweise werden durch die Verwendung von Druckfarben, insbesondere Verpackungsdruckfarben, und Drucklacken mit Bindemitteln auf Basis von hoch- und hyperverzweigten Polyestern, Mehrschichtmaterialien

mit hervorragender Haftung zwischen den einzelnen Schichten erhalten. Der Zusatz von Haftvermittlern ist nicht mehr erforderlich. Dabei ist es ganz besonders überraschend, dass ohne Haftvermittler sogar bessere Ergebnisse erzielt werden können, als wenn Haftvermittler zugesetzt werden. Insbesondere auf polaren Folien konnte die Haftung deutlich verbessert werden.

Die Polyester können als Bindemittelkomponente, beispielsweise in Beschichtungsmassen, gegebenenfalls gemeinsam mit anderen Hydroxy- oder Aminogruppen aufweisenden Bindemitteln, zum Beispiel mit Hydroxy(meth)acrylaten, Hydroxystyryl(meth)acrylaten, linearen oder verzweigten Polyestern, Polyethern, Polycarbonaten, Melaminharzen oder Harnstoff-Formaldehydharzen, zusammen mit gegenüber Carboxy- und/oder Hydroxyfunktionen reaktiven Verbindungen eingesetzt werden, beispielsweise mit Isocyanaten, verkappten Isocyanaten, Epoxiden, Carbonaten und/oder Aminoplasten, bevorzugt Isocyanaten, Epoxiden oder Aminoplasten, besonders bevorzugt mit Isocyanaten oder Epoxiden und ganz besonders bevorzugt mit Isocyanaten.

Bei der erfindungsgemäßen Verwendung der hyperverzweigten Polyester als Baustein zur Herstellung von (cyclo)aliphatischen Polyurethanen werden die hyperverzweigten Polyester optional mit anderen Bausteinen, die gegenüber Isocyanatgruppen reaktive Gruppen aufweisen, mit (cyclo)aliphatischen Di- oder bevorzugt Polyisocyanaten umgesetzt.

Unter (cyclo)aliphatischen Isocyanaten werden cycloaliphatische oder aliphatische Isocyanate verstanden.

Aliphatische Isocyanate sind solche, die ausschließlich an offene gesättigte Ketten gebundene Isocyanatgruppen aufweisen.

Cycloaliphatische Isocyanate sind solche, die mindestens eine an einen gesättigten Ring gebundene Isocyanatgruppen aufweisen.

Analog werden unter (cyclo)aliphatischen Polyurethanen solche Polyurethane verstanden, die ausschließlich aus (cyclo)aliphatischen Isocyanaten aufgebaut sind.

Isocyanate sind beispielsweise aliphatische, aromatische und cycloaliphatische Di- und Polyisocyanate mit einer mittleren NCO-Funktionalität von mindestens 1,8, bevorzugt 1,8 bis 5 und besonders bevorzugt 2 bis 4, sowie deren Isocyanurate, Oxadiazintrione, Iminooxadiazindione, Harnstoffe, Biurete, Amide, Urethane, Allophanate, Carbodiimide, Uretonimine und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder
1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat),
1,3- oder 1,4-Bis(isocyanatomethyl)cyclohexan oder 2,4-, oder 2,6-Diisocyanato-1-methylcyclohexan.

Es können auch Gemische der genannten Diisocyanate vorliegen.

Als Polyisocyanate kommen Isocyanuratgruppen aufweisende Polyisocyanate, Uretdiondiisocyanate, Biuretgruppen aufweisende Polyisocyanate, Amidgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, Carbodiimid- oder Uretonimin-modifizierte Polyisocyanate von geradlinigen oder verzweigten $C_4$-$C_{20}$-Alkylendiisocyanaten oder cycloaliphatischen Diisocyanaten mit insgesamt 6 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 1 bis 60 Gew.% bezogen auf das Di- und Polyisocyanat(gemisch), bevorzugt 2 bis 60 Gew.% und besonders bevorzugt 10 bis 55 Gew.%.

Besonders bevorzugt sind Hexamethylendiisocyanat, 1,3-Bis(isocyanatomethyl)cyclohexan, Isophorondiisocyanat und Di(isocyanatocyclohexyl)methan, ganz besonders bevorzugt sind Isophorondiisocyanat und Hexamethylendiisocyanat, insbesondere bevorzugt ist Hexamethylendiisocyanat.

Weiterhin bevorzugt sind

1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 4,5.

2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
Die Uretdiondiisocyanate können in den Zubereitungen als alleinige Komponente oder im Gemisch mit anderen Polyisocyanaten, insbesondere den unter 1) genannten, eingesetzt werden.

3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 23 Gew.-% und eine mittlere NCO-Funktionalität von 2,8 bis 4,5 auf.

4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, iso-Propanol, n-Propanol, n-Butanol, iso-Butanol, sek-Butanol, tert-Butanol, n-Pentanol, n-Hexanol, n-Heptanol, n-Octanol, n-Decanol, n-Dodecanol (Laurylalkohol), 2-Ethylhexanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol oder mehrwertige Alkohole, wie sie oben bei den Polyesterolen aufgeführt sind, oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.

5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.

6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.

7) Carbodiimid- und/oder Uretonimin-modifizierte Polyisocyanate.

Die Polyisocyanate 1) bis 7) können im Gemisch, gegebenenfalls auch im Gemisch mit Diisocyanaten, eingesetzt werden.

Die Isocyanatgruppen der Di- oder Polyisocyanate können auch in verkappter Form vorliegen. Als Verkappungsmittel für NCO-Gruppen eignen sich z.B. Oxime, Phenole, Imidazole, Pyrazole, Pyrazolinone, Triazole, Diketopiperazine, Caprolactam, Malonsäureester oder Verbindungen, wie sie genannt sind in den Veröffentlichungen von Z.W. Wicks, Prog. Org. Coat. 3 (1975) 73 - 99 und Prog. Org. Coat 9 (1981), 3 - 28, von D.A. Wicks und Z.W. Wicks, Prog. Org. Coat. 36 (1999), 148 - 172 und Prog. Org. Coat. 41 (2001), 1 - 83 sowie in Houben-Weyl, Methoden der Organischen Chemie, Bd. XIV/2, 61 ff. Georg Thieme Verlag, Stuttgart 1963.

Unter Verkappungs- bzw. Blockierungsmitteln werden dabei Verbindungen verstanden, die Isocyanatgruppen in blockierte (verkappte bzw. geschützte) Isocyanatgruppen umwandeln, die dann unterhalb der sogenannten Deblokkierungstemperatur nicht die üblichen Reaktionen einer freien Isocyanatgruppe zeigen. Solche Verbindungen mit blokkierten Isocyanatgruppen kommen üblicherweise in Dual-Cure-Beschichtungsmitteln oder in Pulverlacken zur Anwendung, die über Isocyanatgruppenhärtung endgehärtet werden.

Bei der Verwendung der hyperverzweigten Polyester als Bindemittel, Bindemittelbestandteil oder Additiv in Zweikomponenten-Polyurethan-Lacken werden die hyperverzweigten Polyester mit (cyclo)aliphatischen Polyisocyanaten vermischt und auf ein Substrat aufgetragen. Dies stellt eine besonders bevorzugte Verwendung gemäß der vorliegenden Erfindung dar.

Epoxidverbindungen sind solche mit mindestens einer, bevorzugt mit mindestens zwei, besonders bevorzugt zwei bis zehn Epoxidgruppen im Molekül.

In Betracht kommen z.B. epoxidierte Olefine, Glycidylester (z.B. Glycidyl(meth)acrylat) von gesättigten oder ungesättigten Carbonsäuren oder Glycidylether aliphatischer oder aromatische Polyole. Derartige Produkte werden im Handel in großer Zahl angeboten. Besonders bevorzugt sind Polyglycidylverbindungen vom Bisphenol A-, -F- oder -B-Typ und Glycidylether mehrfunktioneller Alkohole, z.B. des Butandiol, des 1,6-Hexandiol, des Glycerin und des Pentaerythrit. Beispiele für derartige Polyepoxidverbindungen sind Epikote® 812 (Epoxidwert: ca. 0,67 mol/100g) und Epikote® 828 (Epoxidwert: ca. 0,53 mol/100g), Epikote® 1001, Epikote® 1007 und Epikote® 162 (Epoxidwert: ca. 0,61 mol/100g)

der Firma Resolution, Rütapox® 0162 (Epoxidwert: ca. 0,58 mol/100g), Rütapox® 0164 (Epoxidwert: ca. 0,53 mol/100g) und Rütapox® 0165 (Epoxidwert: ca. 0,48 mol/100g) der Firma Bakelite AG, Araldit® DY 0397 (Epoxidwert: ca. 0,83 mol/100g) der Firma Vantico AG.

Carbonatverbindungen sind solche mit mindestens einer, bevorzugt mit mindestens zwei, vorzugsweise zwei oder drei Carbonatgruppen im Molekül, die bevorzugt endständige $C_1$-$C_{20}$-Alkylcarbonatgruppen enthalten, besonders bevorzugt endständige $C_1$-$C_4$-Alkylcarbonatgruppen, ganz besonders bevorzugt endständiges Methylcarbonat, Ethylcarbonat oder n-Butylcarbonat.

Weiterhin kommen Verbindungen mit aktiven Methylol- oder Alkylalkoxygruppen, insbesondere Methylalkoxygruppen in Frage, wie z.B veretherte Umsetzungsprodukte von Formaldehyd mit Aminen, wie Melamin, Harnstoff etc., Phenol/Formaldehydaddukte, Siloxan oder Silangruppen und Anhydride, wie sie z.B. in US 5,770,650 beschrieben sind.

Unter den technisch weit verbreiteten und bekannten, bevorzugten Aminoplasten sind besonders bevorzugt Harnstoffharze und Melaminharze, wie z.B. Harnstoff-Formaldehyd-Harze, Melamin-Formaldehyd-Harze, Melamin-Phenol-Formaldehyd-Harze oder Melamin-Harnstoff-Formaldehyd-Harze, verwendbar.

Als Harnstoffharze sind solche geeignet, die durch Umsetzung von Harnstoffen mit Aldehyden erhältlich sind und gegebenenfalls modifiziert werden können.

Als Harnstoffe sind Harnstoff, N-substituierte oder N,N'-disubstituierte Harnstoffe geeignet, wie z.B. N-Methylharnstoff, N-Phenylharnstoff, N,N'-Dimethylharnstoff, Hexamethylendiharnstoff, N,N'-Diphenylharnstoff, 1,2-Ethylendiharnstoff, 1,3-Propylendiharnstoff, Diethylentriharnstoff, Dipropylentriharnstoff, 2-Hydroxypropylendiharnstoff, 2-Imidazolidinon (Ethylenharnstoff), 2-Oxohexahydropyrimidin (Propylenharnstoff) oder 2-Oxo-5-Hydroxyhexahydropyrimidin (5-Hydroxypropylenharnstoff).

Harnstoffharze können gegebenenfalls teilweise oder vollständig modifiziert werden, z.B. durch Umsetzung mit mono- od. polyfunktionellen Alkoholen, Ammoniak bzw.
Aminen (kationisch modifizierte Harnstoffharze) oder mit (Hydrogen)sulfiten (anionisch modifizierte Harnstoffharze), insbesondere geeignet sind die alkoholmodifizierten Harnstoffharze.

Als Alkohole kommen für die Modifizierung $C_1$ - $C_6$-Alkohole in Frage, bevorzugt
$C_1$ - $C_4$-Alkylalkohole und insbesondere Methanol, Ethanol, iso-Propanol, n-Propanol, n-Butanol, iso-Butanol und sek-Butanol.

Als Melaminharze sind solche geeignet, die durch Umsetzung von Melamin mit Aldehyden erhältlich sind und gegebenenfalls teilweise oder vollständig modifiziert werden können.

Als Aldehyde sind insbesondere Formaldehyd, Acetaldehyd, Iso-Butyraldehyd und Glyoxal geeignet.

Melamin-Formaldehyd-Harze sind Reaktionsprodukte der Umsetzung von Melamin mit Aldehyden, z.B. den o.g. Aldehyden, insbesondere Formaldehyd. Gegebenenfalls werden die erhaltenen Methylol-Gruppen durch Veretherung mit den oben genannten ein- oder mehrwertigen Alkoholen modifiziert. Weiterhin können die Melamin-Formaldehyd-Harze auch wie oben beschrieben durch Reaktion mit Aminen, Aminocarbonsäuren oder Sulfiten modifiziert werden.

Durch Einwirkung von Formaldehyd auf Mischungen von Melamin und Harnstoff beziehungsweise auf Mischungen aus Melamin und Phenol entstehen ebenfalls verwendbare Melamin-Harnstoff-Formaldehyd-Harze beziehungsweise Melamin-Phenol-Formaldehyd-Harze.

Die Herstellung der genannten Aminoplaste erfolgt nach an sich bekannten Verfahren.

Besonders genannte Beispiele sind Melamin-Formaldehyd-Harze, einschließlich monomerer oder polymerer Melaminharze und teilweise oder vollständig alkylierte Melaminharze, Harnstoff-Harze, z.B. Methylolharnstoffe wie Formaldehyd-Harnstoff-Harze, Alkoxyharnstoffe wie butylierte Formaldehyd-Harnstoff-Harze, aber auch N-Methylolacrylamid-emulsionen, iso-Butoxymethylacrylamid-emulsionen, Polyanhydride, wie z.B. Polybernsteinsäureanhydrid, und Siloxane oder Silane, z.B. Dimethyldimethoxysilane.

Besonders bevorzugt sind Aminoplastharze wie Melamin-Formaldehyd-Harze oder Formaldehyd-Harnstoff-Harze.

Bei den Lacken, in denen die Polyester einsetzbar sind, kann sich um konventionelle Basislacke, Wasserbasislacke, im wesentlichen lösemittel- und wasserfreie flüssige Basislacke (100%-Systeme), im wesentlichen lösemittel- und wasserfreie feste Basislacke (Pulverlacke und pigmentierte Pulverlacke) oder im wesentlichen lösemittelfreie, ggf. pigmentierte Pulverlackdispersionen (Pulverslurry-Basislacke) handeln. Sie können thermisch, strahlungs- oder Dual-Cure-härtbar, und selbst- oder fremdvernetzend sein.

Werden die Polyester in Pulverlacken eingesetzt, so können diese Pulverlacke neben den hyperverzweigten Polyestern noch mindestens ein Bindemittel (O) und mindestens einen Vernetzer (V) enthalten. Optional können die Pulverlacke darüberhinaus noch weitere Additive (F) enthalten, wie insbesondere Pigmente.

Als Bindemittel (O), Vernetzer (V) und Additive (F) können dabei solche Verbindungen eingesetzt werden, wie beschrieben in WO 2007/134736, Seite 31, Zeile 33 bis Seite 32, Zeile 9 und Seite 33, Zeile 16 bis Seite 57, Zeile 3, was hiermit per Bezugnahme Bestandteil der vorliegenden Offenbarung sei.

Werden die Polyester in Wasserbasislacken eingesetzt, so sind die Polyester in der Regel in einem Mengenanteil von 0,1 bis 15 Gew%, bevorzugt 0,2 bis 10 Gew%, besonders bevorzugt 0,3 bis 8 Gew%, ganz besonders

bevorzugt 0,4 bis 5 Gew% und insbesondere 0,5 bis 3 Gew% bezogen auf den Festkörpergehalt der Wasserbasislacke enthalten.

Des weiteren können diese Wasserbasislacke lackübliche Lösemittel enthalten, beispielsweise in einem Mengenanteil von bevorzugt unter 20 Gew%, besonders bevorzugt unter 15 Gew%.

Es handelt sich um übliche lacktechnische Lösemittel, diese können beispielsweise von der Herstellung der Bindemittel oder der Polyester stammen oder werden separat zugegeben. Beispiele für solche Lösemittel sind ein- oder mehrwertige Alkohole, z.B. Propanol, Butanol, Hexanol; Glykolether oder -ester, z.B. Diethylenglykoldi-$C_1$ - $C_8$-alkylether, Dipropylenglykoldi- $C_1$ - $C_8$-alkylether, Ethoxypropanol, Butylglykol; Glykole z.B. Ethylenglykol und/oder Propylenglykol, und deren Di- oder Trimere, N- Alkylpyrrolidone, wie z. B. N-Methylpyrrolidon sowie Ketone wie Methylethylketon, Aceton, Cyclohexanon; aromatische oder aliphatische Kohlenwasserstoffe, z.B. Toluol, Xylol oder lineare oder verzweigte aliphatische $C_6$ - $C_{12}$-Kohlenwasserstoffe.

Die Wasserbasislacke besitzen beispielsweise Festkörpergehalte von 10 bis 50 Gew%, für Effektwasserbasislacke liegt er beispielsweise bevorzugt bei 15 bis 30 Gew%, für unifarbige Wasserbasislacke liegt er bevorzugt höher, beispielsweise bei 20 bis 45 Gew%.

Bei der Berechnung des Verhältnisses von Pigment zu Bindemittel wird die Summe der Gewichtsanteile von farbgebenden Pigmenten, Effektpigmenten und/oder Füllstoffen in Beziehung gesetzt zur Summe der Gewichtsanteile von festem Bindemittel, festem Pastenharz und festem Vernetzer im fertigen Wasserbasislack.

Die Wasserbasislacke enthalten neben dem hyperverzweigten Polyester noch mindestens ein Bindemittel (O) und mindestens einen Vernetzer (V). Optional können die Wasserbasislacke darüberhinaus noch weitere Additive (F) enthalten und/oder farb- und/oder effektgebende Pigmente (G).

Als Bindemittel (O), Vernetzer (V), Additive (F) und Pigmente (G) können dabei solche Verbindungen eingesetzt werden, wie beschrieben in WO 2008/009516, Seite 24, Zeile 4 bis Seite 44, Zeile 10, was hiermit per Bezugnahme Bestandteil der vorliegenden Offenbarung sei.

Die nach dem Verfahren gebildeten hochfunktionellen hochverzweigten Polyester sind nach der Reaktion, also ohne weitere Modifikation, mit Hydroxygruppen und/oder mit Säuregruppen terminiert. Sie lösen sich in der Regel gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Unter einem hochfunktionellen Polyester ist im Rahmen dieser Erfindung ein Produkt zu verstehen, das neben den Estergruppen, die das Polymergerüst verknüpfen, end- und/oder seitenständig weiterhin mindestens drei, bevorzugt mindestens sechs, besonders bevorzugt mindestens zehn funktionelle Gruppen aufweist. Bei den funktionellen Gruppen handelt es sich um Säuregruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität, aufweisen. Die hochfunktionellen Polyester der vorliegenden Erfindung weisen zumeist nicht mehr als 500 end- und/oder seitenständige funktionelle Gruppen, bevorzugt nicht mehr als 100 end- und/oder seitenständige funktionelle Gruppen auf.

Die Polyester weisen in der Regel eine Viskosität von nicht mehr als 100 Pa×s auf (gemessen bei 80 °C gemäß DIN EN 3219).

Die Polyester besitzen eine Summe von Säurezahl nach DIN 53402 und OH-Zahl gemäß DIN 53240, Teil 2 von bis zu 800 mg KOH/g, bevorzugt bis zu 750, besonders bevorzugt bis zu 700 und ganz besonders bevorzugt bis zu 600 mg KOH/g.

Dabei beträgt die OH-Zahl nach dieser Norm bevorzugt bis zu 400, besonders bevorzugt bis zu 300 und ganz besonders bevorzugt bis zu 250 mg KOH/g.

Die Polyester weisen in der Regel eine Glasübergangstemperatur von -40 bis 140 °C auf, bevorzugt -30 bis 120 °C, besonders bevorzugt -20 bis 100 °C und ganz besonders bevorzugt -20 bis 90 °C.

Die Glasübergangstemperatur Tg wird mit der DSC-Methode (Differential Scanning Calorimetry) gemäß ASTM 3418/82 bestimmt.

In einer bevorzugten Ausführungsform der vorliegenden Erfindung werden solche Polyester, die ein Tg von -20 bis 70 °C aufweisen in Druckfarben verwendet, da hier besonders eine gute Haftung der Druckfarbe auf dem Untergrund in Kombination mit Blockfestigkeit und gegebenenfalls Klebkraft gegenüber einer Deckschicht erhalten wird.

In einer bevorzugten Ausführungsform der vorliegenden Erfindung werden solche Polyester, die eine Glasübergangstemperatur Tg von mindestens 0 °C aufweisen in Beschichtungsmassen und Lacken verwendet. Dieser Bereich der Glasübergangstemperatur ist zum Erreichen zum Beispiel einer ausreichenden Lackhärte und Chemikalienbeständigkeit vorteilhaft.

Beispiele

Allgemeine Anmerkungen:

Die Molekulargewichte wurden durch Gelpermeationschromatographie (GPC) bestimmt (Eluent: THF. Standard: PMMA).

Die Säurezahl wurde jeweils nach DIN 53402 bestimmt. Die Bestimmung der OH-Zahl (mg KOH/g) erfolgte in Anlehnung an DIN 53240, Teil 2.

Die Bestimmung der Glasübergangastemperaturen erfolgte mittels Differential Scanning Calorimetry (DSC). Dabei wurde die Probe auf -30 °C abgekühlt und in Schritten von 10 °C/min hochgeheizt. Ausgewertet wurde die zweite Aufheizkurve.

Bei dem eingesetzten Octadecenylbernsteinsäureanhydrid handelt es sich um ein technisches Gemisch der Stellungsisomeren bzgl. der Doppelbindung.

Beispiel 1:

In einen 500 ml-Rundkolben, ausgestattet mit Rührer, Innenthermometer, Gaseinleitungsrohr und absteigendem Kühler mit Auffanggefäß wurden 110,1 g (0,50 mol) 2,2,6,6-Tetramethylolcyclohexan-1-ol und 109,6 g (0,75 mol) Adipinsäure, sowie 0,02 g (91 ppm) Di-n-butylzinndilaurat gegeben. Unter Stickstoffbegasung wurde die Mischung auf 160 °C erhitzt und unter Rühren für 1,5 h bei dieser Temperatur gehalten, wobei Reaktionswasser über den absteigenden Kühler abgeschieden wurde. Nachdem eine Menge von 13,7 g Wasser abgeschieden worden war, wurde das Reaktionsgemisch auf Raumtemperatur abgekühlt.

Man erhielt das Polymer in Form eines hellgelben Harzes.

Folgende Kennzahlen wurden bestimmt:

Säurezahl = 123 mg KOH/g Polymer
OH-Zahl = 202 mg KOH/g Polymer
$M_n$ = 695 g/mol, $M_w$ = 66350 g/mol
$T_g$ = 6,8 °C

Beispiel 2

In einen 500 ml-Rundkolben, ausgestattet mit Rührer, Innenthermometer, Gaseinleitungsrohr und absteigendem Kühler mit Auffanggefäß wurden 70,0 g (0,32 mol) 2,2,6,6-Tetramethylolcyclohexan-1-ol, 166,4 g (0,48 mol) Octadecenylbernsteinsäureanhydrid (0,48 mol) sowie 0,02 g (85 ppm) Di-n-butylzinndilaurat gegeben. Unter Stickstoffbegasung wurde die Mischung auf 160 °C erhitzt und unter Rühren für 5 h bei dieser Temperatur gehalten, wobei Reaktionswasser über den absteigenden Kühler abgeschieden wurde. Dann wurde das Reaktionsgemisch auf Raumtemperatur abgekühlt.
Man erhielt das Polymer in Form eines dunkelgelben Harzes.

Folgende Kennzahlen wurden bestimmt:

Säurezahl = 91 mg KOH/g Polymer
OH-Zahl = 81 mg KOH/g Polymer
$M_n$ = 1060 g/mol, $M_w$ = 4680 g/mol
Tg = 9,3 °C

Anwendungstechnische Vergleichsversuche:

Testverfahren:

Lackfilme wurden über 24 h bei 23 ± 2 °C und 50 ± 10 % Luftfeuchte gelagert.

Kratzfestigkeit: Zur Prüfung der Kratzfestigkeit rieb man mit einem 1x1 cm großen Scotch-Brite-Vlies (Scotchbrite®, 7448 Typ S ultrafine) mit einem Auflagegewicht von 500 g über die Lackoberfläche. Der Glanz des Lackes wurde bestimmt mittels eines Mikro TRI-Gloss Messgerätes. Die Abnahme des Glanzes nach 10 und 50 Doppelhüben (dH) kann als Maß für die Kratzbeständigkeit der Lacke gelten. Nach 50 Doppelhüben wurden die Lacke für 1 h bei 60°C

und 12 h bei Raumtemperatur gelagert und anschließend als Maß für die Reflow-Fähigkeit erneut der Glanz ermittelt.

Zur Bestimmung der Staubtrockenzeit wurde die Lackoberfläche mit einem Wattebausch berührt, der Lack gilt dann als staubtrocken, wenn keine Watte mehr an der Oberfläche haften bleibt.

Zur Prüfung des Trocknungsverhaltens der Lacke wird ein mit ca. 60-80g Sand befüllter, mit Rädern versehener Trichter mit konstanter Vorschubgeschwindigkeit über eine mit Lack beschichtete Glasplatte gezogen. Die Vorschubgeschwindigkeit beträgt 1 cm/h. Nach Ende der Prüfungen wird die Platte vom losen Sand befreit. Als Sandtrocknung bezeichnet man die Zeitspanne, zwischen Beginn der Prüfung bis zum letzten, dauerhaften Anhaften der Sandkörner. Die Durchtrocknung wird ermittelt als die Zeit, in der die Räder des Trichters noch eine Spur im Lack hinterlassen.

Die Blockfestigkeit wurde gemäß DIN EN 13523-24 bestimmt.

| | Beispiel 2 | Vergleich |
|---|---|---|
| Basonat® HI 100 [g] | 21,53 | 12,01 |
| Joncryl® 922 [g] | 25,0 | 30,0 |
| Polyester aus Beispiel 2 [g] | 41,67 | |
| Butylacetat [g] | 52,0 | 16,5 |
| Staubtrocken [min] | 15 | 260 |
| Glanz (60°), 10 dH, 30', 60°C | 37,1 | 7,4 |
| Glanz (60°), 50 dH, 30', 60°C | 27,7 | 3,3 |
| Glanz (60°), 1 h, 60°C, 30', 60°C | 38,2 | 3,9 |
| r.t.: Raumtemperatur<br>Joncryl® 922: Polyacrylatol der Firma BASF mit OH-Zahl 140 mg KOH/g<br>Basonat® HI 100 der Fa. BASF SE, Ludwigshafen: isocyanuratgruppenhaltiges Polyisocyanat auf Basis von Hexamethylendiisocyanat mit einem NCO-Gehalt gemäß DIN EN ISO 11909 von 21,5 - 22,5% | | |

Der Polyester gemäß Beispiel 2 war nach Vermischung mit dem aliphatischen Polyisocyanat Basonat® HI 100 ohne weiteres für ausreichende Zeit verarbeitbar und konnte leicht auf ein Substrat appliziert werden. Eine Vergelung wurde nicht festgestellt.

## Patentansprüche

**1.** Verwendung von hochfunktionellen, hoch- oder hyperverzweigten Polyestern mit einem Molekulargewicht $M_n$ von mindestens 500 g/mol und
einer Polydispersität $M_w/M_n$ von 1,2 - 100 erhältlich durch
Umsetzung

- genau einer aliphatischen, cycloaliphatischen, araliphatischen oder aromatischen Dicarbonsäure ($A_2$) oder von Derivaten derselben mit
- mindestens einem β,β,β',β'-Tetra(hydroxymethyl)cycloalkanol oder mindestens einem β,β,β',β'-Tetra(hydroxymethyl)cycloalkanol enthaltendem Reaktionsgemisch,

wobei
man das Verhältnis der reaktiven Gruppen im Reaktionsgemisch so wählt, dass man ein molares Verhältnis von OH-Gruppen zu Carboxygruppen oder deren Derivaten von 5:1 bis 1:5, vorzugsweise von 4:1 bis 1:4, besonders bevorzugt von 3:1 bis 1:3 und ganz besonders bevorzugt von 2:1 bis 1:2 einstellt,
als Haftvermittler in Druckfarben, als Thixotropiermittel, als Baustein zur Herstellung von Polyadditions- oder Polykondensationspolymeren, Lacken, Überzügen, Klebstoffen, Dichtmassen, Giesselastomeren oder Schaumstoffen, als Bestandteil von Bindemitteln in Klebstoffen, Druckfarben, Beschichtungen, Schaumstoffen, Überzügen und Lacken, gegebenenfalls mit Isocyanaten, Epoxygruppen-enthaltenden Bindemitteln oder Alkydharzen.

2. Verwendung gemäß Anspruch 1, **dadurch gekennzeichnet, daß** es sich bei der Druckfarbe um eine Druckfarbe für Flexo- und/oder Tiefdruck handelt.

3. Verwendung gemäß Anspruch 1, **dadurch gekennzeichnet, daß** es sich bei den Polyadditions- oder Polykondensationsprodukten um Polycarbonate, (cyclo)aliphatische Polyurethane, Polyester oder Polyether handelt.

4. Verwendung nach Anspruch 3, **dadurch gekennzeichnet, daß** die Polyadditions- oder Polykondensationsprodukte als Komponente von Druckfarben, Klebstoffen, Beschichtungen, Schaumstoffen, Überzügen und Lacken eingesetzt werden

5. Verwendung nach Anspruch 1, **dadurch gekennzeichnet, daß** es sich bei dem Lack um einen Basislack, Wasserbasislack, flüssigen 100% Basislack, festen Basislack, Pulverlack, pigmentierten Pulverlack oder Pulverlackdispersionhandelt.

6. Verwendung nach Anspruch 5, **dadurch gekennzeichnet, daß** der Lack thermisch, strahlungs- oder DualCurehärtbar ist.

7. Verwendung nach Anspruch 5, **dadurch gekennzeichnet, daß** es sich bei dem Lack um ein (cyclo)aliphatisches Polyurethan handelt.

8. Verwendung nach Anspruch 5, **dadurch gekennzeichnet, daß** der Lack mindestens einen hoch- oder hyperverzweigten Polyester im Gemisch mit mindestens einem (cyclo)aliphatischen Polyisocyanat enthält.

9. Verwendung gemäß Anspruch 8, **dadurch gekennzeichnet, daß** das (cyclo)aliphatische Polyisocyanat auf Basis Hexamethylendiisocyanat, 1,3-Bis(isocyanatomethyl)cyclohexan, Isophorondiisocyanat oder Di(isocyanatocyclohexyl)methan ist.

10. Verwendung gemäß Anspruch 8, **dadurch gekennzeichnet, daß** es sich bei dem (cyclo)aliphatischen Polyisocyanat um ein isocyanuratgruppenhaltiges Polyisocyanat auf Basis Hexamethylendiisocyanat oder Di(isocyanatocyclohexyl)methan handelt.

Europäisches Patentamt
European Patent Office
Office européen des brevets

# EUROPÄISCHER RECHERCHENBERICHT

Nummer der Anmeldung
EP 10 17 0358

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 02/36660 A1 (PERSTORP SPECIALTY CHEM AB [SE]; REHNBERG NICOLA [SE]; OGEMARK KEITH [) 10. Mai 2002 (2002-05-10)<br>* Ansprüche *<br>* Beispiel 1 *<br>* Seite 5, Zeile 3 *<br>* Seite 2, Zeilen 35-38 *<br>----- | 1-10 | INV.<br>C08G63/137<br>C08G63/20<br>C08G83/00<br>C09D167/00<br>C09J167/00<br>C09D175/04<br>C09J175/04 |
| A | DE 10 47 429 B (BASF AG)<br>24. Dezember 1958 (1958-12-24)<br>* Ansprüche 1-3 *<br>* Spalte 1, Zeilen 52-54 *<br>* Beispiel 1 *<br>* Spalte 1, Zeilen 22-25 *<br>----- | 1-10 | |
| A | US 4 209 411 A (GUTIERREZ ANTONIO [US] ET AL) 24. Juni 1980 (1980-06-24)<br>* Anspruch 1 *<br>* Beispiel 4 *<br>----- | 1-10 | |

RECHERCHIERTE SACHGEBIETE (IPC)
C08G
C09D
C09J

Der vorliegende Recherchenbericht wurde für alle Patentansprüche erstellt

1

| Recherchenort | Abschlußdatum der Recherche | Prüfer |
|---|---|---|
| Den Haag | 10. November 2010 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 10 17 0358

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-11-2010

| Im Recherchenbericht angeführtes Patentdokument | Datum der Veröffentlichung | Mitglied(er) der Patentfamilie | Datum der Veröffentlichung |
|---|---|---|---|
| WO 0236660 A1 | 10-05-2002 | AU 9612001 A | 15-05-2002 |
| | | SE 519745 C2 | 08-04-2003 |
| | | SE 0003909 A | 28-04-2002 |
| DE 1047429 B | 24-12-1958 | KEINE | |
| US 4209411 A | 24-06-1980 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9317060 A
- EP 630389 A
- EP 799279 A
- EP 1109775 A
- DE 10163163
- DE 10219508
- WO 2005118677 A
- US 5039760 A
- DE 19519042 A
- DE 4319671 A
- DE 4319672 A
- DE OS2223136 A
- US 5770650 A
- WO 2007134736 A
- WO 2008009516 A


### In der Beschreibung aufgeführte Nicht-Patentliteratur


- *Plast. Massy,* 1963, 18-20
- **P.J. Flory.** *J. Am. Chem. Soc.,* 1952, vol. 74, 2718
- **H. Frey et al.** *Chemistry - A European Journal,* 2000, vol. 6 (14), 2499
- **H. Frey et al.** *Acta Polym.,* 1997, vol. 48, 30-35
- Ullmann's Encyclopedia of Industrial Chemistry. 1999
- *Analytiker Taschenbuch,* 1984, vol. 4, 433-442
- **Z.W. Wicks.** *Prog. Org. Coat.,* 1975, vol. 3, 73-99
- *Prog. Org. Coat,* 1981, vol. 9, 3-28
- **von D.A. Wicks ; Z.W. Wicks.** *Prog. Org. Coat.,* 1999, vol. 36, 148-172
- *Prog. Org. Coat.,* 2001, vol. 41, 1-83
- **Houben-Weyl.** Methoden der Organischen Chemie. Georg Thieme Verlag, 1963, vol. XIV/2, 61 ff